# EUROPÄISCHE PATENTSCHRIFT

(11) **EP 0 576 444 B1**
(45) Veröffentlichungstag und Bekanntmachung des Hinweises auf die Patenterteilung: **09.07.1997**
(21) Anmeldenummer: 92905404.7
(22) Anmeldetag: 22.02.1992
(51) Int. Cl.: H03K 17/16, H01L 27/02, H04L 25/40, H04L 12/40, H04B 1/40

(54) **MONOLITHISCH INTEGRIERTE SENDERENDSTUFE**
MONOLITHIC INTEGRATED TRANSMITTER END STAGE
ETAGE FINAL D'EMETTEUR INTEGRE MONOLITHIQUE

(30) Priorität: 16.03.1991 DE 4108610
(43) Veröffentlichungstag der Anmeldung: 05.01.1994
(73) Patentinhaber: ROBERT BOSCH GMBH, 70442 Stuttgart (DE)
(72) Erfinder: FLEISCHER, Ulrich, D-7401 Pliezhausen (DE); KIENZLER, Rainer, D-7410 Reutlingen (DE); ELBRACHT, Berthold, D-7410 Reutlingen (DE)
(86) Internationale Anmeldenummer: DE9200134
(87) Internationale Veröffentlichungsnummer: WO9217017

(56) Entgegenhaltungen:
- DE-A- 3 928 537
- US-A- 4 614 882
- ELECTRONIC COMPONENTS AND APPLICATIONS, Band. 9, Nr. 3, 1990 HORST EY: "CONTROLLER AREA NETWORK (CAN) COMPONENTS page 155-158 ",
- JP 60-163451
- JP 57-147278

## Beschreibung

### Stand der Technik

Die Erfindung betrifft eine monolitisch integrierte Schaltungsanordnung mit einer Senderendstufe für ein mindestens eine Steuereinheit und Datenübertragungsleitungen umfassendes Datenübertragungssystem gemäß Oberbegriff des Anspruchs 1.

Senderendstufen für Datenübertragungssysteme, insbesondere für Controller-Area-Network-Bussysteme (CAN-Bussysteme) sind bekannt. Mit Hilfe derartiger Senderendstufen werden digitale Signale einer Steuereinheit des Datenbussystems, beispielsweise eines CAN-Controllers, an den Datenbus ausgegeben. Andererseits muß verhindert werden, daß die Senderendstufe durch Rückwirkungen des Datenbusses gestört oder gar beschädigt wird. Beispielsweise kann ein Kurzschluß einer oder mehrerer der Datenleitungen gegen Masse oder gegen die Spannungsversorgung eintreten. Auch können elektromagnetische Störsignale auf die Datenleitungen und damit auf die Senderendstufe einwirken. Nachteil der bekannten Senderendstufen ist, daß sie relativ viel Platz einnehmen und damit die Anwendungsmöglichkeiten beschränkt sind. Beispielsweise bei dem Einsatz von derartigen Senderendstufen in CAN-Bussystemen eines Kraftfahrzeugs ist es von wesentlicher Bedeutung, daß die Schaltung so klein wie möglich ausgelegt ist. Überdies können beim Aufbau der bekannten Senderendstufen Fehler auftreten, die die spätere Funktion des Gesamtsystems beeinträchtigen. Darüber hinaus ist die Ausfallwahrscheinlichkeit der Senderendstufe angesichts der hohen Anzahl der einzelnen Bauteile recht hoch.

In der JP-A 60 163451 wird eine Ausgangsstufe gezeigt, bei der einem Feldeffekttransistor ein Widerstand 2, der als sogenannter Pinch-Widerstand ausgebildet ist, nachgeordnet ist.

Aus der JP-A 57 147278 ist das Vorschalten eines Widerstandes 12 vor das Gate von Feldeffekttransistoren 10 bekannt. Der Widerstand 12 ist als n-Diffusion 26 in einer p-Wanne 22 ausgeführt. Die p-Wanne 22 ist über einen weiteren Widerstand 45 mit dem niedrigen Potential V_{SS} verbunden.

### Vorteile der Erfindung

Die Schaltungsanordnung mit der Senderendstufe gemäß der Erfindung hat demgegenüber den Vorteil, daß sie einen sehr geringen Platzbedarf hat und einfach zu montieren ist. Die Herstellungskosten sowohl der Senderendstufe als auch des Gesamtsystems, in welches die Senderendstufe integriert wird, lassen sich somit stark reduzieren. Überdies können die Ausfallraten des Systems mit Hilfe der vorliegenden Senderendstufe reduziert werden. Dies wird insbesondere dadurch erreicht, daß alle Schaltelemente der Senderendstufe auf einem Halbleitersubstrat untergebracht werden, daß also die gesamte Schaltung monolithisch integriert wird.

Bevorzugt wird eine Ausführungsform der Senderendstufe, bei der jeder der Datenleitungen des Bussystems eine Schaltstufe zugeordnet wird. Auf diese Weise läßt sich eine optimale Störsicherheit erreichen.

In der erfindungsgemäßen Ausführungsform der Senderendstufe sind die Bauteile der Endstufenschaltung in Reihenschaltung angeordnet und zwar so, daß die Rückwirkung der Bauteile aufeinander minimiert wird. Bei der Diffusion verschiedener Bereiche auf dem Substrat zur Herstellung der einzelnen Bauteile entstehen parasitäre Bauteile, die die Funktion der einzelnen Schaltungselemente beeinträchtigen. Durch das Lay-Out und die gewählte schaltungstechnische Anordnung der Senderendstufe können derartige Rückwirkungen und parasitäre Bauteile vermieden bzw. minimiert werden.

Besonders bevorzugt wird eine Ausführungsform der Senderendstufe, bei der den elektronischen Schaltern der Endstufenschaltungen separate Vortreiberstufen zugeordnet sind. Auf diese Weise kann die Signalverzögerung der Schaltung wesentlich reduziert werden, das heißt, es können digitale Signale mit hoher übertragungsrate übertragen werden.

Die erfindungsgemäße Ausführungsform der Senderendstufe zeichnet sich weiter dadurch aus, daß Widerstände unmittelbar den Anschlüssen der Datenleitungen zugeordnet sind. Auf diese Weise kann durch entsprechende Auswahl der Widerstände die Wechselwirkung des Datenbusses mit dem Sender beeinflußt werden.

Bei dieser Ausführungsform, bei der die Widerstände durch ein Diffusionsverfahren herstellbar sind, sind diese als in sogenannten floatenden Wannen liegend ausgebildet. Durch die Auslegung der Topographie der Widerstände kann der Strom im Falle von elektromagnetischen Störungen bzw. Kurzschlüssen der Anschlußklemmen CAN_{H} oder CAN_{L} nach Masse bzw. Versorgungsspannung begrenzt werden, so daß die Senderendstufe bzw. deren Bauteile nicht beschädigt werden oder eine Fehlfunktion des Bausteins erzeugen. Darüber hinaus kann dadurch der Innenwiderstand der Endstufe stabilisiert werden, so daß das Schaltverhalten der Senderendstufe besonders gut auf den CAN-Bus einstellbar ist.

Weiterhin werden in der Ausführungsform der Senderendstufe durch die Herstellung der Widerstände entstehende parasitäre Bauteile, insbesondere parasitäre Transistoren, der floatenden Wannen mit einer Kompensationsschaltung kombiniert, so daß die Wirkung dieser parasitären Bauteile eliminiert wird. Durch diese Maßnahme läßt sich das Schaltverhalten der Senderendstufe optimal einstellen.

In der Ausführungsform der Senderendstufe ist die Kompensationsschaltung als Diode ausgelegt.

Schließlich wird eine Ausführungsform der Senderendstufe bevorzugt, bei der die Endstufenschaltungen, insbesondere deren Dioden so ausgelegt sind, daß im Falle eines Kurzschlusses der zugehörigen Datenleitungen gegen Masse oder gegen die Versorgungsspannung und/oder bei Masseversatz der durch die Bauteile der Senderendstufe fließende Strom begrenzt wird und eine Fehlfunktion des Bausteins verhindert. Auf diese Weise können Störungen oder gar Beschädigungen dieser Bauteile auf ein Minimum reduziert werden.

### Zeichnung

Die Erfindung wird im folgenden anhand der Zeichnungen näher erläutert. Es zeigen:
- Figur 1: ein Blockschaltbild eines CAN-Treibers unter anderem mit einer Senderendstufe und mit einem angedeuteten CAN-Bus und
- Figur 2: eine Prinzipschaltung der separaten Senderendstufe.

### Beschreibung der Ausführungsbeispiele

Die erfindungsgemäße Schaltungsanordnung mit mindestens einer Senderendstufe ist grundsätzlich für beliebige Datenübertragungseinrichtungen verwendbar. Sie soll im folgenden anhand eines CAN-Bussystems erläutert werden.

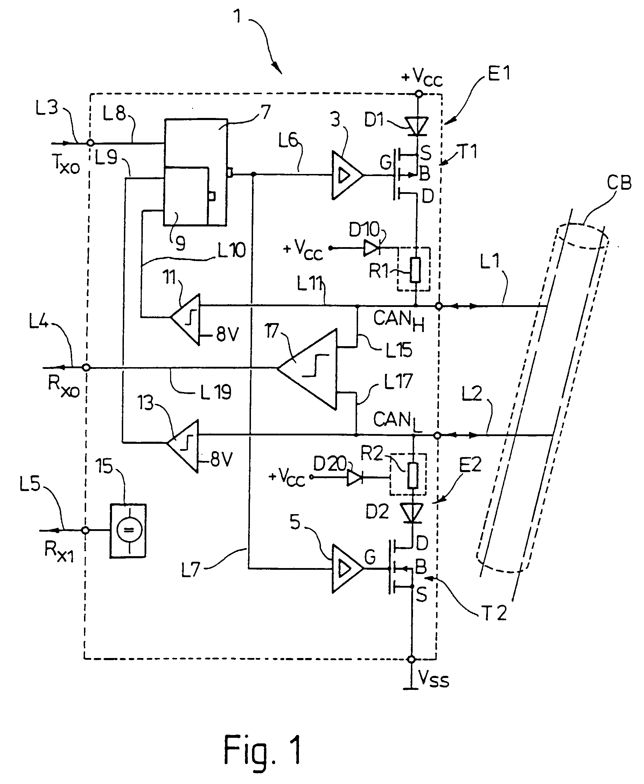

Figur 1 zeigt einen CAN-Treiber 1, dessen Schaltelement durch eine gestrichelte Linie umfaßt sind. An den CAN-Treiber 1 ist über geeignete Leitungen L1 und L2 ein CAN-Bus CB angeschlossen, der hier als Zwei-Draht-Bus ausgelegt ist.

Über diese Leitungen L1 und L2 werden Signale einerseits vom Treiber an den Bus und andererseits in umgekehrter Richtung von der Senderendstufe an den Bus übertragen. Diese Leitungen sind an zwei Anschlußpunkte CAN_{H} und CAN_{L} des CAN-Treibers angeschlossen.

Der CAN-Treiber 1 gemäß Figur 1 weist weitere Anschlüsse auf, nämlich einen Anschluß +V_{CC}, an denen eine positive Versorgungsspannung angeschlossen sein kann, sowie eine Klemme V_{SS}, an die beispielsweise Masse gelegt wird.

Signale einer hier nicht dargestellten Steuerschaltung bzw. eines CAN-Controllers werden über eine Leitung L3 an eine mit T_{X0} gekennzeichnete Klemme gelegt.

An einer Klemme R_{X0} anliegende Signale werden über eine Leitung L4 und an einer Klemme R_{X1} anliegende Signale über eine Leitung L5 an den CAN-Controller weitergeleitet, der hier nicht dargestellt ist.

An der Anschlußklemme +V_{CC} ist eine erste Endstufenschaltung E1 der Senderendstufe angeschlossen, die der Klemme CAN_{H} zugeordnet ist. Die Endstufenschaltung umfaßt eine erste Diode D₁, deren Anode an der Klemme +V_{CC} anliegt. Sie ist elektrisch leitend mit einem MOS-Transistor T1 verbunden, der hier beispielsweise als Depletion-MOS-Fet ausgebildet ist. Die Kathode von D₁ ist mit dem Drain-Anschluß D und mit dem Bulk-Anschluß B des Transistors T1 verbunden. Der Source-Anschluß S des Transistors führt über einen Widerstand R1 an die Klemme CAN_{H}. Der hier dargestellte Transistor T1 ist als p-Kanal-Fet ausgebildet.

Der Gate-Anschluß G des Transistors T1 ist mit dem Ausgang einer hier nur angedeuteten Treiberschaltung 3 verbunden.

Eine zweite Endstufenschaltung E2 der Senderendstufe liegt zwischen der Klemme CAN_{L} und der Klemme V_{SS}. Hier ist ein Widerstand R2 unmittelbar an der Klemme CAN_{L} angeschlossen, der andererseits mit der Anode einer Diode D₂ verbunden ist. Deren Kathode liegt an den Source-Anschluß S eines zweiten Transistors T2 der ebenfalls als Depletion-MOS-Fet ausgelegt ist. Dessen Bulk-Anschluß B und Drain-Anschluß D sind miteinander verbunden und liegen an der Klemme V_{SS}. Der Gate-Anschluß G des zweiten Transistors T2 ist wiederum mit dem Ausgang einer nur skizziert dargestellten Treiberschaltung 5 verbunden. Die beiden Treiberschaltungen 3 und 5 der Endstufenschaltungen El und E2 werden über Leitungen L6 und L7 von einer Abschaltlogikschaltung 7 angesteuert, die dazu dient, die Endstufentransistoren T1 und T2 bei Kurzschluß oder bei Verpolung gegen Beschädigung zu schützen. Es handelt sich hier um eine Schaltung bekannter Art, so daß auf deren Beschreibung verzichtet wird.

Die Signale des CAN-Controllers werden über die Leitung L3 und über die Klemme T_{X0} an die Eingangsleitung L8 der Abschaltlogikschaltung 7 gelegt. Diese weist außerdem eine UND-Schaltung 9 auf, deren Eingänge L9 und L10 über Komparatorschaltungen 11 und 13 mit den Klemmen CAN_{H} und CAN_{L} verbunden sind.

Die an der Klemme CAN_{H} anliegenden Signale des CAN-Busses CB werden über eine Leitung L11 an einen ersten Eingang eines Komparators 11 gelegt, an dessen zweiten Eingang eine feste Bezugsspannung von beispielsweise 8V liegt.

Über eine Leitung L13 werden an der Klemme CAN_{L} anliegende Signale des CAN-Busses CB an einen ersten Eingang eines Komparators 13 gelegt, an dessen zweiten Eingang eine Referenzspannung von beispielsweise 8V liegt.

Der CAN-Treiber 1 umfaßt noch einen Spannungsteiler 15, durch den an die Klemme R_{X1} eine äußere Referenzspannung für eine weitere Beschaltung des Treiberbausteins gelegt wird.

Der CAN-Treiber 1 weist einen Eingangskomparator 17 auf, an dessen ersten Eingang über eine Leitung L15 Signale der Klemme CAN_{H} und an dessen zweiten Eingang über eine Leitung L17 Signale der Klemme CAN_{L} gelegt werden. Das heißt also, an der Eingangsseite des Empfangskomparators 17 liegen die vom CAN-Bus CB eingehenden Signale.

Der Ausgang des Empfangskomparators 17 ist über eine Leitung L19 mit der Klemme R_{X0} verbunden. Die an dieser Klemme anliegenden Signale werden über die Leitung L4 an den CAN-Controller weitergeleitet.

Figur 1 zeigt damit einen Ausschnitt aus einem CAN-Bussystem, dessen CAN-Bus CB als Zwei-Draht-Bus ausgelegt ist, wie er beispielsweise in Kraftfahrzeugen Verwendung findet. Die auf dem CAN-Bus vorhandenen Signale werden über die Leitungen L1 und L2 an die Klemmen CAN_{H} und CAN_{L} des CAN-Treibers 1 gelegt, von dem Empfangskomparator 17 verarbeitet und über die Klemme R_{X0} über die Leitung L4 an den CAN-Controller weitergeleitet. Umgekehrt können Signale des CAN-Controllers über die Klemme T_{X0} und über die Abschaltlogik 7 an die Endstufenschaltungen El und E2 der Senderendstufe gelegt werden und damit zu den Klemmen CAN_{H} und CAN_{L} gelangen. Derartige vom CAN-Controller abgegebene Signale können dann über die Leitungen L1 und L2 an den CAN-Bus abgegeben werden.

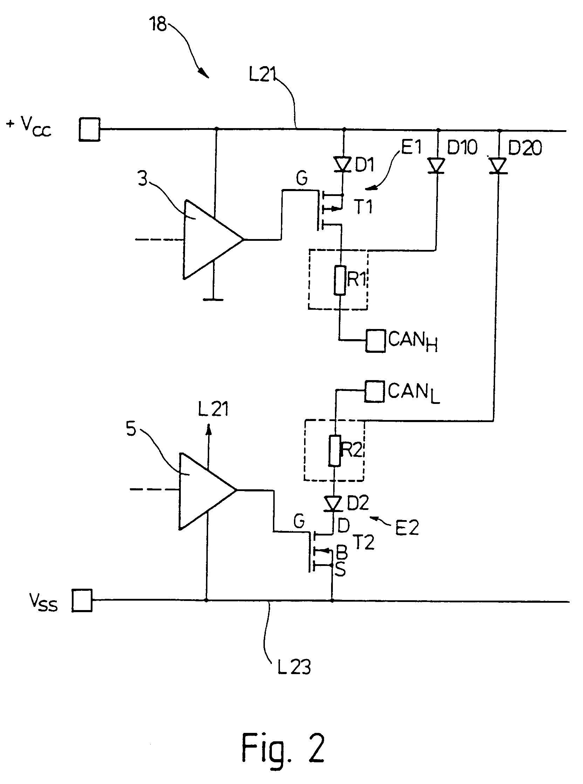

Zur Verdeutlichung ist in Figur 2 die Senderendstufe 18 noch einmal separat dargestellt, wobei in Figur 1 und 2 übereinstimmende Teile mit gleichen Bezugszeichen versehen sind.

An die Klemme +V_{CC} ist eine Leitung L21 angeschlossen, während an der Klemme V_{SS} eine Leitung L23 elektrisch leitend angeschlossen ist. Der der ersten Schaltstufe El zugeordnete erste Vortreiber 3 ist einerseits an der Leitung L21 angeschlossen, also mit der Spannungsversorgung +V_{CC} verbunden, andererseits an der Leitung L23, die hier an Masse liegt. Der Ausgang des Vortreibers 3 liegt am Gate-Anschluß G des ersten Transistors T1, der, wie ausgeführt, als MOS-Fet ausgelegt ist.

Der Widerstand R1 der ersten Endstufenschaltung El ist hier in einer floatenden Wanne liegend ausgelegt, was durch ein gestricheltes Rechteck angedeutet ist. Dazu ist ein p-diffundiertes Gebiet in eine n-Epitaxie eingebracht. Dabei entsteht als parasitäres Bauteil durch das Zusammenspiel der Wanne mit dem übrigen Substrat ein parasitärer Transistor. Dadurch wird die Gesamtfunktion der Senderendstufe 18 beeinträchtigt. Daher wird hier eine Kompensationsschaltung vorgesehen, die hier als Diode D10 ausgebildet ist. Der parasitäre Transistor wird dadurch eliminiert, daß die floatende Wanne des Widerstands R1 über die Diode D10 an die Spannungsversorgung +V_{CC} angeschlossen wird. Das heißt, dem Widerstand R1 wird eine Diode D10 zugeordnet, deren Kathode an der Wanne des Widerstandes und deren Anode an der Leitung L21, also an der Spannungsversorgung +V_{CC} liegt.

Entsprechend ist die zweite Schaltstufe E2 ausgelegt. Allerdings ist hier festzuhalten, daß die Anordnung der in Reihe geschalteten Bauelemente, der Diode D2, des elektronischen Schalters T2 und des Widerstands R2 gegenüber der ersten Schaltstufe El verändert wurde, da die parasitären Elemente der Diode D1 im anderen Fall einen so kleinen Gleichtaktbereich zulassen würden: Der als MOS-Fet ausgelegte Transistor T2 der zweiten Schaltstufe E2 ist unmittelbar an die Leitung L23, also an Masse angeschlossen; an dessen Drain-Anschluß D ist die Kathode der Diode D2 gelegt, deren Anode andererseits an dem Widerstand R2 angeschlossen ist. Der zweite Anschluß dieses Widerstands R2 liegt an der dem zweiten Draht des Datenbusses CB zugeordneten Klemme CAN_{L}.

Auch der Widerstand R2 ist in einer sogenannte floatenden Wanne liegend ausgelegt. Er wird durch die Bildung eines p-diffundierten Gebiets innerhalb einer n-Epitaxie hergestellt, wobei wiederum ein parasitäres Bauteil, nämlich ein Transistor durch die Zusammenwirkung mit dem Substrat entsteht. Die Wirkung dieses parasitären Transistors wird wiederum durch eine als Diode ausgelegte Kompensationsschaltung eliminiert, nämlich durch die Diode D20, deren Kathode wiederum an der Wanne des Widerstandes R2 angeschlossen ist, während ihre Anode an der Leitung L21, und damit an der Versorgungsspannung +V_{CC} liegt.

An dem Gate-Anschluß G des Transistors T2 ist der dieser Schaltstufe E2 zugeordnete Vortreiber 5 angeschlossen, der einerseits wiederum an der Leitung L21 und andererseits an Masse bzw. der Leitung L23 liegt.

Die den Vortreibern 3 und 5 zugeleiteten Signale, die letztlich vom CAN-Controller zugeführt werden, sind durch eine gestrichelte Linie an der Eingangsseite der Vortreiber angedeutet.

Die insbesondere aus Figur 2 ersichtliche Senderendstufe 18 ist besonders auf den Betrieb eines Datenübertragungssystems bzw. auf ein CAN-Bussystem in einem Kraftfahrzeug ausgelegt, wo besonders viele Störsignale anfallen. Die Senderendstufe ist aufgrund der niederohmigen Ankopplung an den CAN-Bus CB besonders durch die Störsignale gefährdet, die einerseits durch Kurzschluß der Datenbusleitungen gegen Masse oder gegen die Versorgungsspannung und andererseits durch einen Masseversatz entstehen. Die einzelnen Bauteile der Schaltstufen El und E2 sind so angeordnet und ausgebildet, daß bei derartigen Störsignalen, die auch auf elektromagnetischen Einflüssen beruhen können, Beschädigungen der Senderendstufe und Fehlfunktion des Bauteils vermieden werden.

Beispielsweise begrenzen die Widerstände R1 und R2 den Strom durch die Schaltstufen bei Störspitzen, die durch elektromagnetische Signale oder Kurzschlüsse erzeugt werden. Gleichzeitig wird der Innenwiderstand der Senderendstufe stabilisiert, so daß deren reflexionsarmer Anschluß an das abgeschlossene Bussystem gewährleistet bleibt.

Die Dioden D1 und D2 sind innerhalb der Schaltstufen so angeordnet und bei der Herstellung der Senderendstufen so hergestellt, daß die Senderendstufe bei einem Kurzschluß der Busleitungen gegen Batterie bzw. Masse, also bei einem Kurzschluß der Anschlußklemmen CAN_{H} und CAN_{L} gegen +V_{CC} bzw. V_{SS} geschützt sind und die volle Funktion aufrechterhalten wird. Gleichzeitig ist gewährleistet, daß ein Masserversatz keine Schäden der Bauelemente der Schaltung oder Fehlfunktion des Bauteils bewirkt.

Durch die Vortreiber 3 und 5, die zwischen dem Ausgang des CAN-Controllers und den Endstufentransistoren T1 und T2 eingefügt sind, wird eine minimale Verzögerungszeit der Senderendstufe 18 gewährleistet, so daß diese auch zur Übertragung von Sendesignalen hoher Datenrate geeignet ist und zu minimalen Verzerrungen führt.

Insgesamt ist ersichtlich, daß die monolithisch integrierte Senderendstufe sehr klein aufgebaut werden und in einen CAN-Treiber integriert werden kann. Dadurch ist die Einbringung bzw. Montage einer derartigen Senderendstufe bzw. des zugehörigen Treibers in eine diese Baugruppen aufnehmende Steuerschaltung eines Kraftfahrzeugs sehr einfach und kostengünstig. Überdies ist die Ausfallwahrscheinlichkeit derartig eingebrachter Baugruppen besonders gering, da auch bei bespielsweise hohen mechanischen Belastungen die elektrische Verbindung der einzelnen Schaltelemente sicher gewährleistet ist. Anders als bei diskret aufgebauten Schaltungen können hier Leitungen beispielsweise Leitungsdrähte, durch Vibrationen praktisch nicht brechen.

## Patentansprüche

1. Monolithisch integrierte Schaltungsanordnung mit mindestens einer Endstufenschaltung (E1, E2) die einer Datenleitung (L1, L2) eines Bussystems, insbesondere eines CAN-Bus, zugeordneten ist, die einen an eine Versorgungsspannung (V_{cc}, Vₛₛ) angeschlossen, von einem Steuersignal angesteuerten Schalttransistor (T1, T2) und einen mit der Schaltstrecke des Schalttransistors (T1, T2) in Reihe liegenden Widerstand (R1, R2) aufweist, der unmittelbar an einem Anschlußpunkt (CAN_{H}, CAN_{L}) verbunden ist, welcher an die Datenleitung (L1, L2) anschließbar ist, dadurch gekennzeichnet, daß der Widerstand (R1, R2) in einer floatenden Wanne der monolithisch integrierten Schaltungsanordnung liegend ausgebildet ist, daß eine Diode (D10, D20) vorgesehen ist, die mit ihrer Anode an die positive Versorgungsspannung (+V_{cc}) und mit ihrer Kathode an die Wanne des Widerstandes (R1, R2) angeschlossen ist, und daß in Reihe zum Schalttransistor (T1, T2) eine weitere (D1, D2) angeordnet ist.

2. Schaltungsanordnung nach Anspruch 1, dadurch gekennzeichnet, daß der Schalttransistor (T1, T2) als Feldeffekttransistor ausgebildet ist.

3. Schaltungsanordnung nach Anspruch 2, dadurch gekennzeichnet, daß die Anode der weiteren Diode (D1) mit der positiven Versorgungsspannung (+V_{cc}) verbunden ist, daß die Kathode der weiteren Diode (D1) mit dem Source des Schalttransistors (T1) verbunden ist, daß das Drain des Schalttransistors (T1) über den Widerstand (R1) mit dem Anschlußpunkt (CAN_{H}) verbunden ist, und daß der Anschlußpunkt (CAN_{H}) mit der Datenleitung (L1) verbindbar ist.

4. Schaltungsanordnung nach Anspruch 2, dadurch gekennzeichnet, daß das Source des Schalttransistors (T2) mit einem Massenanschluß (V_{SS} ) verbunden ist, daß das Drain des Schalttransistors (T2) mit der Kathode der weiteren Diode (D2) verbunden ist, daß die Anode der weiteren Diode (D2) über den Widerstand (R2) mit dem Anschlußpunkt (CAN_{L}) verbunden ist, und daß der Anschlußpunkt (CAN_{L}) mit der Datenleitung (L2) verbindbar ist.

5. Schaltungsanordnung nach einem der vorhergehenden Ansprüche, dadurch gekennzeichnet, daß dem Schalttransistor (T1, T2) eine Treiberschaltung (3, 5) vorgeschaltet ist, die an das Gate des Schalttransistors (T1, T2) das Steuersignal abgibt.

6. Schaltungsanordnung nach einem der vorhergehenden Ansprüche, dadurch gekennzeichnet, daß der Widerstand (R1, R2) so ausgelegt ist, daß der Innenwiderstand der Endstufenschaltung (E1, E2) stabilisiert wird.

7. Schaltungsanordnung nach einem der vorhergehenden Ansprüche, dadurch gekennzeichnet, daß der Widerstand (R1, R2) so ausgelegt ist, daß im Fall von Störungen , insbesondere von elektromagnetischen Störungen, der durch die Bauteile fließende Strom begrenzt wird.

8. Schaltungsanordnung nach einem der vorhergehenden Ansprüche, dadurch gekennzeichnet, daß die weitere Diode (D1, D2) im Falle eines Kurzschluß der Anschlußpunkte (CAN_{H}, CAN_{L}) gegen Masse oder gegen Versorgungsspannung und/oder bei Masseversatz den durch die Bauteile fließenden Strom verhindert oder begrenzt.

## Claims

1. Monolithically integrated circuit arrangement having at least one output stage circuit (E1, E2) which is assigned to a data line (L1, L2) of a bus system, in particular of a CAN bus, has a switching transistor (T1, T2) which is connected to a supply voltage (V_{cc}, Vₛₛ) and is driven by a control signal and has a resistor (R1, R2) which is connected in series with the switching path of the switching transistor (T1, T2) and is connected directly to a connection point (CAN_{H}, CAN_{L}) which can be connected to the data line (L1, L2), characterized in that the resistor (R1, R2) is designed lying in a floating well in the monolithically integrated circuit arrangement, in that a diode (D10, D20) is provided, whose anode is connected to the positive supply voltage (+V_{cc}) and whose cathode is connected to the well of the resistor (R1, R2), and in that a further diode (D1, D2) is arranged in series with the switching transistor (T1, T2).

2. Circuit arrangement according to Claim 1, characterized in that the switching transistor (T1, T2) is designed as a field-effect transistor.

3. Circuit arrangement according to Claim 2, characterized in that the anode of the further diode (D1) is connected to the positive supply voltage (+V_{cc}), in that the cathode of the further diode (D1) is connected to the source of the switching transistor (T1), in that the drain of the switching transistor (T1) is connected via the resistor (R1) to the connection point (CAN_{H}), and in that the connection point (CAN_{H}) can be connected to the data line (L1).

4. Circuit arrangement according to Claim 2, characterized in that the source of the switching transistor (T2) is connected to an earth connection (Vₛₛ), in that the drain of the switching transistor (T2) is connected to the cathode of the further diode (D2), in that the anode of the further diode (D2) is connected via the resistor (R2) to the connection point (CAN_{L}), and in that the connection point (CAN_{L}) can be connected to the data line (L2).

5. Circuit arrangement according to one of the preceding claims, characterized in that a driver circuit (3, 5), which emits the control signal to the gate of the' switching transistor (T1, T2), is connected upstream of the switching transistor (T1, T2).

6. Circuit arrangement according to one of the preceding claims, characterized in that the resistor (R1, R2) is designed such that the internal resistance of the output stage circuit (E1, E2) is stabilized.

7. Circuit arrangement according to one of the preceding claims, characterized in that the resistor (R1, R2) is designed such that the current flowing through the components is limited in the event of disturbances, in particular in the event of electromagnetic disturbances.

8. Circuit arrangement according to one of the preceding claims, characterized in that the further diode (D1, D2) prevents or limits the current flowing through the components in the event of a short circuit from the connection points (CAN_{H}, CAN_{L}) to earth or to the supply voltage and/or in the event of an earth offset.

## Revendications

1. Circuit intégré monolithique comprenant au moins un étage final (E1, E2) associé à une ligne de données (L1, L2) d'un système de bus notamment d'un bus CAN, ayant un transistor de commutation (T1, T2) commandé par un signal de commande, et relié à une tension d'alimentation (V_{cc}, Vₛₛ), ainsi qu'une résistance (R1, R2) montée en série dans le circuit de commutation du transistor de commutation (T1, T2), et reliée directement à un point de raccordement (CAN_{H}, CAN_{L}) qui lui-même peut être relié à la ligne de transmission de données (L1, L2),
caractérisé en ce que
la résistance (R1, R2) est réalisée et placée dans une cuvette flottante du circuit monolithique intégré, une diode (D10, D20) étant prévue dont l'anode est reliée à la tension d'alimentation positive (+V_{cc}) et dont la cathode est reliée à la cuvette de la résistance (R1, R2), et une autre diode (D1, D2) est branchée en série sur le transistor de commutation (T1, T2).

2. Circuit selon la revendication 1,
caractérisé en ce que
le transistor de commutation (T1, T2) est un transistor à effet de champ.

3. Circuit selon la revendication 2,
caractérisé en ce que
l'anode de l'autre diode (D1) est reliée à la tension d'alimentation positive (+V_{cc}),
la cathode de l'autre diode (D1) est reliée à la source du transistor de commutation (T1),
le drain du transistor de commutation (T1) est relié par la résistance (R1) au point de branchement (CAN_{H}) et le point de branchement (CAN_{H}) peut être relié à la ligne (L1).

4. Circuit selon la revendication 2,
caractérisé en ce que
la source du transistor de commutation (T2) est reliée à la borne de masse (Vₛₛ),
le drain du transistor de commutation (T2) est relié à la cathode de l'autre diode (D2),
l'anode de l'autre diode (D2) est reliée par la résistance (R2) au point de branchement (CAN_{L}) et
le point de branchement (CAN_{L}) est relié à la ligne de transmission de données (L2).

5. Circuit selon l'une quelconque des revendications précédentes,
caractérisé en ce qu'
un circuit pilote (3, 5) est prévu en amont du transistor de commutation (T1, T2), ce circuit transmettant le signal de commande vers la grille du transistor de commutation (T1, T2).

6. Circuit selon l'une quelconque des revendications précédentes,
caractérisé en ce que
la résistance (R1, R2) est conçue pour stabiliser la résistance interne du circuit de l'étage final (E1, E2).

7. Circuit selon l'une quelconque des revendications précédentes 1 à 6,
caractérisé en ce que
la résistance (R1, R2) est conçue pour qu'en cas de parasites, notamment de parasites électromagnétiques, le courant qui la traverse est limité par des composants.

8. Circuit selon l'une quelconque des revendications précédentes,
caractérisé en ce que
l'autre diode (D1, D2), en cas de court-circuit des points de branchement (CAN_{H}, CAN_{L}) à la masse ou à la tension d'alimentation et/ou en cas de décalage de la masse, évite ou limite le courant traversant les composants.
